# EUROPÄISCHE PATENTSCHRIFT

(11) **EP 0 874 553 B1**
(45) Veröffentlichungstag und Bekanntmachung des Hinweises auf die Patenterteilung: **16.10.2002**
(21) Anmeldenummer: 97901558.3
(22) Anmeldetag: 20.01.1997
(51) Int. Cl.: A23C 9/154, A23L 1/187

(54) **PASTÖSE NAHRUNGSPRODUKTE AUF MILCHBASIS**
PASTY MILK-BASED FOOD PRODUCTS
PRODUITS ALIMENTAIRES PATEUX A BASE DE LAIT

(30) Priorität: 18.01.1996 DE 19601683
(43) Veröffentlichungstag der Anmeldung: 04.11.1998
(73) Patentinhaber: Zott GmbH & Co., 86690 Mertingen (DE)
(72) Erfinder: PAHNKE, Otto, D-20099 Hamburg (DE); GRUBER, Sonja, D-86757 Wallerstein (DE); KUNKEL, Robert, D-82140 Olching (DE); FEISTLE, Xaver, D-86690 Mertingen (DE); EGGENMÜLLER, Anton, D-86647 Wortelstetten (DE)
(74) Vertreter: Luderschmidt, Schüler & Partner GbR
(86) Internationale Anmeldenummer: EP9700243
(87) Internationale Veröffentlichungsnummer: WO97025874

(56) Entgegenhaltungen:
- EP-A- 0 504 632
- EP-A- 0 534 855
- DE-A- 3 502 967
- FR-A- 1 414 386
- GB-A- 2 110 517
- US-A- 3 674 507
- US-A- 4 623 552
- DEUTSCHE MOLKEREI ZEITUNG DMZ, Bd. 113, Nr. 49, 3.Dezember 1992, Seiten 1566-1567, XP000329849 NADISON J: "DIE WECHSELWIRKUNG VON CARRAGEENAN UND STAERKE IN CREME-DESSERTS"
- DATABASE FSTA INTERNATIONAL FOOD INFORMATION SERVICE (IFIS), FRANFURT/MAIN, DE 84:P0221, P. GLAHN: "Die Herstellung tischfertiger Desserts" XP002031381 & DEUTSCHE MILCHWIRTSCHAFT, Bd. 33, Nr. 39, 1982, Seiten 1436-1438,
- DATABASE CABA 74:61899, MORETIN-GAMBLIN M.: "Nutritive value of flavoured milk jellies" XP002031382 & CAHIERS DE NUTRITION ET DE DI T TIQUE, Bd. 8, Nr. 3, 1973, Seiten 269-270,

## Beschreibung

Die Erfindung betrifft ein pastöses Nahrungsprodukt auf Milchbasis, das einen hohen Energieinhalt pro Verzehreinheit zur Verfügung stellt.

Es ist bekannt, daß Kinder zur Versorgung der von ihnen benötigten Energie mit Milchprodukten auf fester/halbfester Basis ernährt werden können, wobei diese Nahrungsprodukte häufig zwischen zwei bisquitartigen Belägen angeordnet sind, die eine Sandwich-Struktur (Brotschnitte) nachahmen sollen. Derartige Nahrungsprodukte sind üblicherweise bißfest und weisen einen relativ geringen Wassergehalt auf, so daß nach ihrem Verzehr ein bestimmter Flüssigkeitsbedarf übrig bleibt. Nahrungsprodukte dieser Art sind beispielsweise in der EP 64 155 beschrieben.

Diese Nahrungsprodukte können nicht, sofern sie nicht übermäßig konsumiert werden, den täglichen Bedarf an Milchbestandteilen zur Verfügung stellen, die üblicherweise besonders Kinder und Jugendliche für ihren Organismus benötigen. Dies gilt insbesondere für die in der Milch enthaltenen Serumproteine, Milchfette, Elektrolyte (in der Milch enthaltene Kalziumionen), Spurenelemente udgl. Während nämlich Jugendliche ab einem bestimmten Zeitpunkt den Milchkonsum einschränken bzw. einstellen, können Kleinkinder das vorgeschriebene tägliche Milchvolumen häufig nicht aufnehmen bzw. wollen dies nicht tun. Insofern ist der sich aus diesem eingeschränkten Milchkonsum ergebende Anteil der zuzuführenden Energiemenge nicht ausreichend und muß durch andere Nährstoffe ergänzt werden, was im hohen Maße unerwünscht ist.

Man hat zwar schon versucht, Milchgetränke durch Zusatz von Milchrahm in ihrem kalorischen Gehalt aufzubessern, wobei üblicherweise eine allenfalls sämige Konsistenz erreicht wird, die sich u.a. nicht zur Herstellung von Mehrschichtstrukturen eignet, deren Schichten nicht ineinander fließen. Solche Strukturen müssen beim Abfüllen bereits über eine vorbestimmte Viskosität verfügen, die gewährleistet, daß eine überschichtete Masse, die im darauffolgenden Schritt abgefüllt wird, nicht in die darunter liegende Schicht eindringen kann. Insofern müssen also solchen Nahrungsprodukten Verdickungsmittel hinzugesetzt werden, um das flüssige Nahrungsprodukt so zu konditionieren. daß höhere Viskositätswerte erzielt werden.

Andererseits ist jedoch der Abfüllbarkeit derartiger flüssiger Nahrungsprodukte mit einem hohen Feststoff-/Kaloriengehalt maschinenmäßig eine Grenze gesetzt, denn zum einen muß die zusammengemischte flüssige Masse einen Ultrahocherhitzer bei Temperaturen von 120-140°C passieren, und zum anderen muß die dann derart hitzebehandelte Lösung auf eine Abfülltemperatur unterhalb 10°C abgefüllt werden, bei der sie den vorstehend genannten Viskositätswert einnehmen muß. In beiden Fällen muß die zu behandelnde Lösung jedoch eine solche Viskosität haben, daß sie sowohl die Ultrahocherhitzungsanlage als auch die Abfüllanlage bei den üblichen Maschinenpumpdrücken passieren kann. Aufgrund dieser Tatsachen hielt man daher bisher die Abfüllung von flüssigen Milchprodukten mit einem Gehalt an einer hohen Trockenmasse nur ohne Verdickungsmittel für möglich, so daß die Herstellung pastöser Nahrungsprodukte schwierig erschien. Um derartigen bekannten Nahrungsprodukten also eine verbesserte Konsistenz zu geben. wurden diese beim Abfüllen beispielsweise mit Luft in Kombination mit Stabilisierungsmitteln aufgeschlagen, so daß sich eine schaumartige bzw. schlagsahnenartige festere Struktur ergab.

Andererseits ist jedoch eine cremige, puddingartige Struktur derartiger Zubereitungen erwünscht, denn solche Massen werden bevorzugt von Kindern gegessen. Dies gilt insbesondere für Mehrschichtanordnungen, in denen die Schichten eine unterschiedliche Geschmackszusammensetzung bzw. Farbe besitzen, beispielsweise eine Vanille/Schokolademischung, wie dies bei Puddingen der Fall ist.

Diese weisen jedoch ebenfalls nicht einen wünschenswerten Gehalt an Milchbestandteilen auf.

Aus der GB- 2.110.517 A sind gelierte Milchzusammensetzungen bekannt, bei denen eine übliche Milch mit einer getrockneten Fettemulsion, einer modifizierten Stärke sowie Gelbildnern in Form von Jota-Carrageen und Xantan zu Zwecken der Verdickung versetzt ist. Ein derart hergestelltes Milchprodukt hat jedoch keine einheitliche cremig-glatte Konsistenz, da es mit einzelnen Gelbröckchen durchsetzt ist. Da das Produkt zusätzlich zu schleimig erscheint und darüber hinaus der Geschmack ohne Aromatisierung unangenehm ist, kann es nicht zur Herstellung einer wohlschmeckenden Creme eingesetzt werden.

Insofern bestand das Bedürfnis, konzentrierte Milchprodukte mit einem erhöhten Fettgehalt zur Verfügung zu stellen, was zur Folge hat, daß das vom Konsumenten aufzunehmende Volumen um die Hälfte und mehr verkürzt werden kann, ohne daß die ursächlich auf die Milchbestandteile zurückzuführenden Energiemengen verringert werden. Besonders erstrebenswert ist es, daß eine energetische Verzehreinheit zur Verfügung gestellt wird, die derjenigen eines Glases Milch (0,21) entspricht, wobei das Volumen dieser Verzehreinheit um mehr als die Hälfte, vorzugsweise auf ein Drittel dieses Volumens verkürzt ist.

Insbesondere ist es erwünscht, eine löffelbare, d.h. pastöse Masse zu erhalten, die insbesondere zum Aufbau von Mehrschichtstrukturen befähigt ist.

Demzufolge lagen der Erfindung die vorstehend erwähnten Aufgaben zugrunde.

Gemäß einem ersten unabhängigen Erfindungsgedanken erfolgt die Lösung durch ein pastöses Nahrungsprodukt auf Milchbasis, das einen hohen Energieinhalt pro Verzehreinheit zur Verfügung stellt, mit einem Milchgehalt von 75-92 Gew.-%, wobei die Milch einen Fettgehalt von 12-18 Gew.-% aufweist, einem Zuckergehalt von 5-20 Gew.-%, einem Stärkegehalt von 1,5-2,5 Gew.-%, einem Gel-Bildnergehalt von 0,1-0,5 Gew.-%, wobei das Verhältnis von Stärke/Gelbildner 15:1 bis 7:1, bezogen auf das Gewicht beträgt, einem Aromastoffgehalt von 0,1-0,5 Gew.-% und einer Viskosität von mindestens 3 Pas. Mit diesem Nahrungsprodukt können die der Erfindung zugrunde liegenden Aufgaben gelöst werden.

Technologisch bietet dieses pastöse Nahrungsprodukt eine ausgezeichnete Verarbeitbarkeit, denn es passiert ohne Verstopfungsprobleme den Ultrahocherhitzer einerseits und die Abfüllanlage andererseits bei den jeweiligen Temperaturen. So beträgt die Abfüllviskosität mindestens 3 Pas. bei 10°C, so daß sich dieses Nahrungsprodukt unproblematisch abfüllen läßt. Aufgrund der Viskosität hat es eine pastöse Zusammensetzung, die im wesentlichen auf den hohen Fettgehalt der Milch und auf die Verdickungsmittel zurückzuführen ist. Durch diesen Gehalt an Verdickungsmittel läßt sich auch die Viskosität einstellen, die jedoch - soweit die Abfüllbarkeit betroffen ist - nicht wesentlich über 15 Pas. bei 10°C liegen soll.

Die Viskosität der erfindungsgemäßen Masse soll aber vorteilhafterweise in einem Bereich von 5-10 Pas. bei 10°C liegen. Die Viskosität wird gemessen gemäß DIN 53019 mit einem Rotationsviskosimeter bei einer Schergeschwindigkeit von 6,46 (1/Sekunde). Die Einhaltung dieser Viskositätsgrenzen ist erfindungswesentlich, denn, sofern die Viskositätsuniergrenze unterschritten wird, fängt die Abfüllanlage an zu tropfen und es kann keine feste Phasengrenzfläche zu einer auf eine untere Schicht aufgeschichteten oberen Schicht mehr fest erzeugt werden. Wesentlich ist auch, daß die erfindungsgemäßen Massen praktisch nach dem Abfüllen nicht einem Nachverdickungsschritt, im Gegensatz zu einem Pudding, unterliegen, so daß erfindungsgemäß bereits beim Abfüllvorgang die pastöse Konsistenz des Endprodukts erreicht ist.

Es ist erfindungsgemäß möglich, daß auf eine untere, d.h. zuerst eingeführte Schicht, die vorzugsweise eine Viskosität von 5 Pas. hat, auch eine viskosere obere Schicht aufgesetzt wird, die beispielsweise eine doppelt so große Viskosität (10 Pas. jeweils bei 10°C) besitzt. Hierdurch wird noch besser eine exakte Grenzfläche zwischen der Ober- und Unterschicht eingehalten, wobei jedoch festzustellen ist, daß dies auch bei in etwa gleichen Viskositätswerten, zum Beispiel 5 Pas., möglich ist. Insofern ist also erfindungsgemäß eine Mehrschichtanordnung herstellbar, bei der die untere, zuerst eingeführte Schicht eine geringere Viskosität hat als die obere, nachfolgend eingefüllte Schicht, ohne daß ein Ineinanderfließen der Schichten erfolgt.

Weiterhin ist zu beachten, daß die Trockenmasse der Schichten nicht notwendigerweise mit der Viskosität der jeweiligen Beschichtungsmasse korreliert. So kann beispielsweise die Trockenmasse der unteren Schicht bei maximal 38-39 Gew.-%, jedoch ihre Viskosität bei 5 Pas. liegen, während die Trockenmasse der oberen Schicht 30-31 Gew.-% betragen kann, jedoch die Viskosität bei ca. 10 Pas. liegt. Insofern ist also die Wahl des Verdickungssystems für die Einstellung der Viskositätswerte wesentlich. Erfindungsgemäß liegt die Trockenmasse vorteilhafterweise zwischen 30 und 40 Gew.-%, bezogen auf das Gesamtgewicht.

Der Mindestviskositätswert des erfindungsgemäßen Nahrungsprodukts garantiert dabei, daß nicht nur aus einer Masse bestehende Milchprodukte erfindungsgemäß hergestellt werden können, sondern auch Mehr-/Vielschichtprodukte, die durch Übereinanderschichten unterschiedlicher Schichten gebildet werden. Besonders bevorzugt ist eine Mehrschichtanordnung, bei der im wesentlichen die gleiche Basiszusammensetzung zum Einsatz kommt, die aus Milch, Zucker und Verdickungsmitteln besteht. Dieser Basiszusammensetzung werden dann entsprechend dem Geschmackswunsch bestimmte Aromen, Fruchtmark, Fruchtpürrees, Fruchtauszüge, wie Kakao udgl. zugesetzt.

Im Gegensatz zu Puddingmassen oder ähnlichen anderen Massen, in denen die Viskosität nach dem Abfüllen stark ansteigt, bleibt bei dem erfindungsgemäßen Nahrungsprodukt die Viskosität nach der Abfüllung im wesentlichen unverändert, d.h. die abgefüllte Masse bleibt in ihrem pastösem Zustand, ohne sich zu verfestigen. Insofern läßt sich bereits bei der Grundmasse die im fertigen Nahrungsprodukt erwünschte Viskosität (pastöse Struktur) in vorbestimmter Weise einstellen.

Wie bereits vorstehend festgestellt, bleiben bei dem besonders bevorzugten Mehrschichtprodukt, sofern eine Viskositätsgrenze von mindestes 3 Pas. beim Abfüllen eingehalten wird. feste Grenzen zwischen den einzelnen Schichten bestehen, die sich besonders deutlich an einer Hell/Dunkelanordnung (Kakao/Nuß/-Schichten) einstellen. Eine derartige Mehrschichtanordnung bleibt nicht nur beim Abfüllen in seiner Schichtungsstruktur, sondern vielmehr auch nach längerer Lagerung bei Raumtemperatur erhalten und kann ohne weiteres mehrfach gestürzt werden, ohne daß diese Struktur zerstört wird. Andererseits läßt sich eine solche Mehrschichtanordnung mit einem Löffel ohne weiteres durchrühren, so daß aufgrund der pastösen-cremigen Struktur nach relativ kurzer Mischzeit eine einheitliche Masse erhalten wird.

Gemäß einem zweiten unabhängigen Erfindungsgedanken weist das erfindungsgemäße Nahrungsprodukt, bezogen auf 100 g der gesamten Zusammensetzung, einen Energiegehalt von wenigstens 170 kcal, vorteilhafterweise mehr als 190 kcal auf. Dabei liegt der auf die Milchanteile zurückzuführende Energieanteil, bezogen auf die von sämtlichen Mischungskomponenten zur Verfügung gestellte Energie, bei mindestens 65 %, vorzugsweise bei ca. 70 % und mehr, wobei die restlichen Energieanteile im wesentlichen auf den Zuckeranteil zurückzuführen sind.

Aufgrund dieser hohen Energiemenge pro Gewichtseinheit kann die zu verzehrende Menge selbst je Energieeinheit klein gehalten werden. Dies hat zur Folge, daß gegenüber einem vorgegebenen Milchvolumen, beispielsweise 0,2 1, das Volumen des erfindungsgemäßen Nahrungsprodukts auf 1/3 verringert werden kann, wobei jeweils die auf die Milch selbst zurückzuführenden Energiebestandteile im wesentlichen gleich bleiben. Dabei weist die erfindungsgemäße Masse zusätzlich noch eine cremige Struktur auf, die angenehm nach Art einer Creme gegessen werden kann.

Der Feststoffgehalt (Trockenmasse) der erfindungsgemäßen Masse kann bis zu 40 Gew.-%, bezogen auf die Gesamtmasse, betragen, wobei dann die Grenze der Verarbeitbarkeit erreicht wird. Vorteilhafterweise liegt die Trockenmasse zwischen 29 und 39 Gew.-%.

Unter "Milch" ist erfindungsgemäß eine Milch zu verstehen, die einen Fettgehalt von 12-18, vorteilhafterweise etwa 15 Gew.-% aufweist.

Eine derartige Milch wird aus üblich entrahmter Vollmilch durch Zusatz von vorher abgetrenntem Milchfett in Form von Rahm hergestellt. Diese Ausführungsform ist bevorzugt. Andererseits kann jedoch aber auch das Milchfett teilweise, d.h. bis zu 50 %, ersetzt werden durch pflanzliche Fette und/oder Öle. Diese pflanzlichen Fette und/oder Öle müssen dann in Form von Öl in Wasser-Emulsionen vorgelegt und mit der Milch auf den gewünschten Fettgehalt vermischt werden.

Die Milch selbst wird in Form von Vollmilch eingesetzt, kann jedoch aber auch aus Magermilch und/oder Vollmilchpulver rekonstituiert werden. Wie bereits festgestellt, ist jedoch der Einsatz von Vollmilch in Verbindung mit Zusatz von Rahm zur Herstellung einer Milch mit vorzugsweise 15 % Fettgehalt bevorzugt.

Das pastöse Milchprodukt enthält üblicherweise Milch in einer Menge von 75-92 Gew.-%, vorzugsweise 78-90 Gew.-%, bezogen auf das Gesamtgewicht des Endprodukts.

Der von der Milch, wobei unter "Milch" immer die aufgefettete Milch zu verstehen ist, beigesteuerte Energieanteil liegt üblicherweise oberhalb von mindestens 65, vorzugsweise bei ca. 70 % bezogen auf den Gesamtenergieinhalt der Mischung.

Als Süßungsmittel kommen Kristallzucker, Fructose, Zuckersirupe, Glucose, Invertzucker und deren Gemische in Frage. Bevorzugt ist Rohrzucker in einer Menge von 5-20, vorzugsweise 7-16 Gew.-%.

Zusätzlich zu den vorstehend genannten Süßungsminel können auch andere Süßungsmiliel eingesetzt werden. Hierzu gehören Saccharin, Cyclamate, Acesulfam, Aspartam udgl.

Der Kristallzucker kann durch derartige andere Süßmittel ganz oder teilweise ersetzt werden. Die hierdurch bedingte Viskositätsänderung in dem erfindungsgemäßen Nahrungsprodukt hat eine Verringerung der Trockenmasse zur Folge, was sich wiederum auf die Viskosität der gesamten Mischung auswirkt. Nachstehend wird erläutert, wie diese Viskosität eingestellt werden kann.

Die Hauptkomponente des eingesetzten Verdickungsmittels ist Stärke, wobei unter "Stärke" auch chemisch modifizierte Stärke zu verstehen ist. Einsetzbare Stärken sind beispielsweise Knollenpflanzenstärke, wie Kartoffelmehl, Maisstärke, Wachs-Mais-Stärke, Weizenstärke, Manniokstärke udgl. Bei der Modifizierung werden derartige Stärken üblicherweise durch Säure hydrolysiert und mit Hilfe von Alpha-Amylase zu niederpolymeren Nahrungsprodukten enzymatisch gespalten. Ggfls. können derartige Nahrungsprodukte noch hydriert und substituiert werden. Insofern hängt das Molekulargewicht der Stärke-Glucose-Polymere von dem Spaltungsverfahren ab und liegt üblicherweise zwischen 1000 und 2000 Dalton für die Amylose und zwischen 10⁷ und 10⁸ für ein Amylopectin. Solche unterschiedlichen Stärken weisen auch ein unterschiedliches Viskositäsverhalten in Abhängigkeit von der Temperatur auf. Derartige Stärken werden beispielsweise von den Firmen Cerestar und Roquette in den Handel gebracht.

Des weiteren wird die Viskosität des Endprodukts auch durch den Stärkeaufschluß bei der Ultrahocherhitzung des erfindungsgemäßen Nahrungsprodukts bestimmt, die noch weiter zum Stärkeabbau beiträgt. Insofern hat das behandelte Nahrungsprodukt eine höhere Viskosität gegenüber dem Ausgangsprodukt, was auf die Erhitzungsbehandlung in der Ultrahocherhitzungsanlage zurückzuführen ist.

Wie bereits vorstehend festgestellt, trägt die Stärke hautsächlich zur Verdickung (Gelbildung) des erfindungsgemäßen Nahrungsprodukts bei.

Erfindungsgemäß werden weitere Gelbildner, wie Carubin (Johannisbrotkernmehl), Carrageen, Guaran udgl. sowie deren Gemische eingesetzt, wobei Carrageen bevorzugt ist. Die erfindungsgemäß eingesetzten Carrageene weisen üblicherweise ein Molekulargewicht von 200.000 bis 800.000 Dalton auf und erzeugen ein Gel, welches durch mechanischen Einfluß wie Rühren, Pumpen, Kühlen oder Füllen, in seiner Struktur zwar reversibel gestört wird, jedoch ohne Klumpenbildung abgefüllt werden kann.

Vorteilhafterweise lassen sich von den Carrageenen gemäß einer ersten Variante das Lambda-Carrageen und gemäß einer zweiten Variante ein Gemisch von Jota- und Kappa-Carrageen einsetzen, wobei deren Gewichtsverhältnis zwischen 2:1 und 1:2, vorzugsweise 1:0,7 bis 0,7:1, liegt.

Als weiteres vorteilhaftes Gelierungsmittel kann Johannisbrotkernmehl eingesetzt werden, das ebenfalls ein nicht ionogenes Gelierungsmittel auf Galactose/Manosebasis darstellt. Derart hergestellte Gellösungen sind üblicherweise strukturviskos, jedoch nicht schnittfest.

Erfindungsgemäß beträgt der Stärkeanteil 1,5-2,5 Gew.-% und liegt vorteilhafterweise bei ca. 2 Gew.-%.

Die weiteren Gelbildner in Form von Carrageen und/oder Johannisbrotkernmehl liegen in einer Menge von 0,1-0,3, vorzugsweise 0,15-0,25 Gew.-% vor. Dabei beträgt das Verhältnis von Stärkederivat zu Gelbildnern, bezogen auf das Gewicht, 15:1 bis 5:1.

Des weiteren können natürliche oder naturidentische Aromastoffe in der erfindungsgemäßen Mischung vorliegen. Zu solchen Aromastoffen gehören beispielsweise Vanille. Zitronen-Orangenaroma sowie die üblichen. auf dem Ernährungsgebiet eingesetzten Aromen, die - wie erwähnt - auch naturidentisch sein können. Derartige Aromen werden in einer Menge von 0,1-0,5 Gew.-%, bezogen auf das Gesamtgemisch, zugegeben.

Zur weiteren Aromatisierung ist auch die Zugabe von Kakaopulver möglich, das gewöhnlich stark entölt ist. Hierdurch wird eine cremige Masse mit dunkelbrauner Farbe und Kakaogeschmack erzeugt. Dieses Kakaopulver kann dem Gemisch in einer Menge von 2-3, vorzugsweise ca. 2,5 Gew.-% zugesetzt werden.

Des weiteren können auch Fruchtmarke oder Fruchtpürrees zugesetzt werden, um den Geschmack der Creme in eine gewünschte Richtung zu dirigieren. So können beispielsweise Erdbeer- oder Aprikosenpürrees eingesetzt werden.

Unter einem Fruchtmark ist ein Nußmark, insbesondere Haselnußmark, bevorzugt, das eine erheblich geschmacksgebende Komponente aufweist. Ein derartiges Mark/Pürree kann in einer Menge von 1-2, vorteilhafterweise etwa 1,4-1,7 Gew.-% zugesetzt werden.

Sofern Haselnußmark eingesetzt wird, trägt dies nicht nur zum Aroma der Mischung, sondern vielmehr auch zur Anhebung der ernährungsphysiologischen Eigenschaften bei, denn Haselnußmark weist einen relativ hohen Gehalt an ungesättigten Fettsäuren sowie hochwertiges Einweiß auf. Weitere Nußsorten für ein solches Nußmark umfassen Cashewnuß, Erdnuß, Pistazie, Mandel oder Walnuß. Andererseits kann - wie vorstehend erläutert - ein Mark durch beliebige andere Fruchtpürrees und/oder Aromen ersetzt werden.

Der pH-Wert liegt im schwach sauren Bereich, sofern saure Früchte in das Nahrungsprodukt eingearbeitet werden, ansonsten ab er beim Neutralpunkt (pH = 6-7).

Die erfindungsgemäße Masse wird folgendermaßen hergestellt.

In die bereits mit dem Milchfett versehene Milch, die volumenmäßig den weitaus größten Teil der Mischung darstellt, werden die einzelnen Komponenten nacheinander unter Rühren zugesetzt, wobei zur Verminderung des Klumpens einzelne Komponenten miteinander kombiniert werden können, beispielsweise die Carrageenkomponente mit dem Kristallzucker oder das Kakaopulver mit dem Kristallzucker.

Nach dem Abschluß des Mischvorgangs wird die erhaltene Mischung in einem Ultrahocherhitzer bei Temperaturen von 120-140°C über eine kurze Zeitdauer sterilisiert, wobei - wie vorstehend erläutert - zugleich noch ein Stärkeaufschluß der Stärkekomponente erfolgt.

Anschließend wird die heißbehandelte Mischung auf 10°C abgekühlt, wobei sich eine Viskosität von mindestens 3 Pas. einstellt. Hierauf erfolgt die Abfüllung in einen Kunststoffbecher, der anschließend mit einer Aluminiumfolie abgesiegelt wird.

Gemäß einer ersten bevorzugten Ausführungsform wird ein homogenes einphasiges Gemisch im pastösen Zustand hergestellt.

Bei einem solchen pastösen Nahrungsprodukt kann es sich um ein nahezu ungefärbtes Nahrungsprodukt handeln, das mit einem beliebigen Aroma ausgestattet ist, beispielsweise mit einem Vanille- oder Nuß-Aroma. Andererseits kann jedoch aber auch ein gefärbtes Nahrungsprodukt erzeugt werden, wobei die Farbe aus dem Aromastoff bzw. Lebensmittelfarbe stammt, wenn hierdurch praktisch nicht der Trockengehalt der Mischung verändert werden soll. Andererseits können auch pulverartige oder mark/pürreeartige Gemische zugesetzt werden, die hierdurch die Trockenmasse erhöhen. Bevorzugt ist zur Erzeugung eines Kakaogeschmacks der Zusatz von Kakaopulver und/oder zur Erzeugung eines Nußgeschmacks der Zusatz von Nußmark. Andererseits kann jedoch aber auch - wie vorstehend festgestellt - ein Fruchtpürree (Erdbeerpürree udgl.) zugesetzt werden, wodurch eine rötliche Farbgebung des cremeartigen Nahrungsprodukts erzeugt wird.

Gegebenenfalls kann auf diese Schicht eine oder mehrere weitere Schichten aus einem halbfesten/festen Nahrungsmittel aufgebracht sein. Hierfür kommen Bisquitschichten nach Art einer Sandwich-Umhüllung, eine Sahneschicht, eine Pudding-, Joghurt- oder eine süße Saucenschicht in Frage.

Gemäß einer zweiten bevorzugten Ausführungsform wird eine Mehrschichtanordnung erfindungsgemäß hergestellt, die zumindest zwei auch in der Farbe bzw. im Geschmack unterschiedliche Schichtungen aufweist. Diese Schichtungen basieren vorteilhafterweise auf einer gleichen Grundzusammensetzung, in die zur unterschiedlichen Farb-/Geschmackserzeugung jeweils unterschiedliche geschmacksbildende Pulver/Pürrees/Marke/Aromen zugegeben worden sind.

Besonders bevorzugt ist eine zweischichtige Hell/Dunkel-Anordnung, die dadurch erzeugt wird, daß die eine Schicht zur Erzeugung der dunklen Farbe mit einer Kakaokomponente versehen ist, während die helle Schicht lediglich mit einem wenig farbbildenden Aromastoff vermischt wurde. Diese Zwei-Schichtanordnung liegt im wesentlichen ohne Vermischung der beiden Schichten vor und ist in dieser Struktur langzeitstabil.

Nachstehend werden zwei Beispiele für eine Einschicht- und ein Beispiel für eine Mehrschichtanordnung angegeben, wobei sich die Prozentangaben auf das Gewicht beziehen.

### Beispiel 1

Das erste pastöse Nahrungsprodukt wird durch Vermischen der nachfolgenden Bestandteile herstellt.

| | |
|---|---|
| Milch mit 15 % Fettgehalt | 90 % |
| Kristallzucker | 7 % |
| Stärkederivat | 2,5 % |
| Gelbildner (Lambda-Carrageen) | 0,4 % |
| Aroma (Vanille) | 0,1 % |

Dieses Nahrungsprodukt ist hell und weist eine Trockenmasse, bezogen auf 100 g, von ca. 31 % auf. Es enthält etwa 2,7 g Einweiß, 13,5 g Kohlenhydrate und 13,4 g Fett. Die Energiemenge, ebenfalls bezogen auf 100 g beträgt 186 kcal, entsprechend 773 KJ. Die Viskosität beträgt 10 Pas. bei 10°C.

### Beispiel 2

Zur Erzeugung einer dunklen pastösen Mischung werden die nachfolgenden Komponenten miteinander vermischt.

| | |
|---|---|
| Milch mit 15 % Fett | 81 % |
| Kristallzucker | 13 % |
| Kakaopulver stark entölt | 2,3 % |
| Stärke | 1,4 % |
| Haselnußmark | 1,7 % |
| Gelbildner (Gemisch v. Jota- und Kappa-Carrageen in einem Gewichtsverhältnis von 1:1) | 0,4 % |
| Aroma (Vanille und Nuß 1:1) | 0,2 % |

Bezogen auf 100 g weist dieses Gemisch einen Einweißgehalt von 3,1 g, einen Kohlenhydratgehalt von 20,8 g, einen Fettgehalt von 13,1 g und eine Trockenmasse von ca. 38 % auf. Der Energiegehalt beträgt 213 kcal entstprechend 890 KJ bei 100 g. Die Viskosität beträgt 5,5 Pas. bei 10°C.

### Beispiel 3

### 2-Schichtanordnung

Die Masse gemäß Beispiel 1 und die Masse gemäß Beispiel 2 werden in einen Kunststoffbecher eingefüllt mit folgender Maßgabe. Zunächst werden 22,5 g der Masse gemäß Beispiel 2 (dunkle Masse) eingefüllt, die anschließend mit 40 g der hellen Masse gemäß Beispiel 1 überschichtet wird.

Das Endprodukt hat folgende Zusammensetzung.

Es weist einen Eiweißgehalt von 2,9 g, einen Kohlenhydratgehalt von 15,9 g und einen Fettgehalt von 13,5 g auf und besitzt einen Energieinhalt von 197 kcal/819 KJ, wobei sich diese Werte jeweils auf 100 g beziehen.

Dieser Becher kann zusammen mit weiteren drei Bechern zu einer abbrechbaren Becheranordnung zusammengefaßt werden, die demzufolge ein Gewicht von 250 g des pastösen Nahrungsprodukt aufweist.

### Vergleichsbeispiel 1

Es wurde das Beispiel A der GB- 2.110.517 mit der Maßgabe nachgearbeitet, daß anstelle der modifizierten Wachs-Mais-Stärke, bei der es sich um eine Hydroxypropylstärke handelt, eine reine modifizierte Wachs-Mais-Stärke eingesetzt wurde. Die Rezeptur hatte nachfolgende Zusammensetzung:

| | |
|---|---|
| Milch, 3,5 Fett | 82,2 % |
| Zucker | 9 % |
| pflanzliches Fett | 7,4 % |
| Wachs-Mais-Stärke, modifiziert | 1 % |
| Jota-Carrageen | 0,2 % |
| Xantan | 0,1 % |
| Johannisbrotkernmehl | 0,1 % |

Dieses Nahrungsprodukt weist eine Trockenmasse von 27,7 % auf. Die Viskosität beträgt nach längerer Kühlung ca. 7 Pas. bei 11 °C. Der Fettgehalt beträgt insgesamt 10,5 %.

Die gesamten Komponenten werden Nach dem Mischen auf einer UHT-Anlage erhitzt und anschließend abgekühlt. Dabei wurde die Konsistenz fester, und es traten Gelbröckchen auf. Insgesamt konnte keine cremig-glatte Konsistenz erhalten werden. Das Produkt schmeckt ohne Aroma unangenehm und ist darüber hinaus in seinem Mundgefühl schleimig.

## Patentansprüche

1. Pastöses Nahrungsprodukt auf Milchbasis, das einen hohen Energieinhalt pro Verzehreinheit zur Verfügung stellt, **gekennzeichnet durch** einen Gehalt an Milch von 75-92 Gew.-%,
wobei die Milch einen Fettgehalt von 12-18 Gew.-% aufweist, Zucker von 5-20 Gew.-%,
Stärke von 1,5-2,5 Gew.-%,
Gel-Bildner von 0,1-0,5 Gew.-%,
wobei das Verhältnis von Stärke/Gel-Bildner von 15:1 bis 5:1, bezogen auf das Gewicht beträgt,
Aromastoffe von 0,1-0,5 Gew.-%
und **durch** eine Viskosität von mindestens 3 Pas. bei 10°C.

2. Pastöses Nahrungsprodukt nach Anspruch 1, **dadurch gekennzeichnet, daß** der Fettgehalt der Milch etwa 15 Gew.-% beträgt.

3. Pastöses Nahrungsprodukt nach Anspruch 1 oder 2, **dadurch gekennzeichnet, daß** der Milchgehalt 78-90 Gew.-%, der Zuckergehalt 7-16 Gew.-%, der Stärkegehalt bei 2 Gew.-% und der Gel-Bildnergehalt bei 0,15-0,4 Gew.-% liegt.

4. Pastöses Nahrungsprodukt nach Anspruch 1, **dadurch gekennzeichnet, daß** die Viskosität in einem Bereich von 5-10 Pas. bei 10°C liegt.

5. Pastöses Nahrungsprodukt nach einem der Ansprüche 1 bis 4, **gekennzeichnet durch** Carrageene und/oder Johannisbrotkernmehl als Gel-Bildner.

6. Pastöses Nahrungsprodukt nach Anspruch 1, **dadurch gekennzeichnet, daß** die Stärke hydrolytisch/enzymatisch modifiziert ist.

7. Pastöses Nahrungsprodukt nach einem der Ansprüche 1 bis 6, **dadurch gekennzeichnet, daß** es Kakaopulver in einer Menge von 2-3, vorzugsweise etwa 2,5 Gew.-%, aufweist.

8. Pastöses Nahrungsprodukt nach einem der Ansprüche 1 bis 7, **dadurch gekennzeichnet, daß** es Fruchtmark oder Fruchtpürree in einer Menge von etwa 1-2 Gew.-% aufweist.

9. Pastöses Nahrungsprodukt nach Anspruch 8, **dadurch gekennzeichnet, daß** es Haselnußmark in einer Menge von etwa 1,7 Gew.-% aufweist.

10. Mehrschichtanordnung, enthaltend wenigstens eine Schicht aus einem pastösen Nahrungsprodukt gemäß den Ansprüchen 1-9 als erste Schicht, wobei auf die erste Schicht eine zweite Schicht eines pastösen/wenigstens halbfesten Nahrungsmittels geschichtet ist, das wenigstens die gleiche Viskosität wie die erste Schicht aufweist.

11. Mehrschichtanordnung nach Anspruch 10, **dadurch gekennzeichnet, daß** wenigstens zwei Schichten vorgesehen sind, deren Grundzusammensetzung der Zusammensetzung gemäß Anspruch 1 entspricht, wobei die einzelnen Schichten jedoch eine unterschiedliche Farbe/unterschiedlichen Geschmack aufweisen.

12. Mehrschichtanordnung nach Anspruch 10 oder 11, **dadurch gekennzeichnet, daß** die untere Schicht eine mit Kakao dunkel eingefärbte Schicht ist, während die obere Schicht eine mit Vanille oder Nußgeschmack versehene, helle Schicht ist.

## Claims

1. Pasty milk-based food product which makes available a high energy content per unit of consumption, **characterised in that** it contains 75 - 92 per cent by weight of milk, the milk having a fat content of 12 - 18 per cent by weight, 5 - 20 per cent by weight of sugar, 1.5- 2.5 per cent by weight of starch, 0.1 - 0.5 per cent by weight of gelling agent, with a ratio of starch to gelling agent of between 15:1 to 5:1, relative to the weight, 0.1 - 0.5 per cent by weight of aromatic substances, and possesses a viscosity of at least 3 Pa.s at 10°C.

2. Pasty food product according to claim 1 **characterised by** a fat content of the milk of 15 per cent by weight.

3. Pasty food product according to claim 1 or 2, **characterised in that** it contains 78 - 90 per cent by weight of milk, 7 - 16 per cent by weight of sugar, 2 per cent by weight of starch and 0.15 - 0.4 per cent by weight of gelling agent.

4. Pasty food product according to claim 1, **characterised in that** the viscosity lies in a range of 5 - 10 Pa.s at 10°C.

5. Pasty food product according to one of claims 1 to 4, **characterised in that** it contains carrageens and/or carob flour as gelling agent.

6. Pasty food product according to claim 1, **characterised in that** the starch is hydrolytically / enzymatically modified.

7. Pasty food product according to one of claims 1 to 6, **characterised in that** it contains cocoa powder in a quantity of 2 - 3, preferably approximately 2.5% by weight.

8. Pasty food product according to one of claims 1 to 7, **characterised in that** it contains fruit pulp or fruit puree in a quantity of approximately 1 - 2 per cent by weight.

9. Pasty food product according to claim 8, **characterised in that** it contains hazel-nut pulp in a quantity of approximately 1.7 per cent by weight

10. Multilayer arrangement comprising at least one layer of a pasty food product according to claims 1 - 9 as the first layer, with a second layer of a pasty or at least semi-solid food product overlaying the first layer, having at least the same consistency as the first layer.

11. Multilayer arrangement according to claim 1, **characterised in that** at least two layers are provided whose basic composition corresponds to the composition according to claim 1, with each layer possessing a different colour / different taste.

12. Multilayer arrangement according to claim 10 or 11, **characterised in that** the lower layer is a dark layer coloured with cocoa whereas the upper layer is a light colour, flavoured with vanilla or nut.

## Revendications

1. Produit alimentaire pâteux à base de lait qui procure une haute teneur énergétique par unité de consommation, **caractérisé par** une teneur en lait de 75 à 92 % en poids, le lait présentant une teneur en graisse de 12 à 18 % en poids, par une teneur en sucre de 5 à 20 % en poids, par une teneur en amidon de 1,5 à 2,5 % en poids, par une teneur en gélifiant de 0,1 à 0,25 % en poids, dans lequel le rapport amidon/gélifiant s'élève de 15 : 1 à 5 : 1 rapportés au poids, par une teneur en agents aromatisants de 0,1 à 0,5 % en poids, et par une viscosité d'au moins 3 Pa.s à 10 °C.

2. Produit alimentaire pâteux selon la revendication 1, **caractérisé en ce que** la teneur du lait en graisse s'élève à environ 15 % en poids.

3. Produit alimentaire pâteux selon la revendication 1 ou 2, **caractérisé en ce que** la teneur en lait s'élève de 78 à 90 % en poids, la teneur en sucre s'élève de 7 à 16 % en poids, la teneur en amidon s'élève à 2 % en poids et la teneur en gélifiant s'élève de 0,15 à 0,4 % en poids.

4. Produit alimentaire pâteux selon la revendication 1, **caractérisé en ce que** la viscosité se situe dans la plage de 5 à 10 Pa.s à 10 °C.

5. Produit alimentaire pâteux selon l'une quelconque des revendications 1 à 4, **caractérisé par** du carragheen et/ou de la farine de caroube à titre de gélifiant.

6. Produit alimentaire pâteux selon la revendication 1, **caractérisé en ce que** l'amidon a été soumis à une modification par hydrolyse/par voie enzymatique.

7. Produit alimentaire pâteux selon l'une quelconque des revendications 1 à 6, **caractérisé en ce qu'**il présente de la poudre de cacao en une quantité de 2 à 3, de préférence en une quantité d'environ 2,5 % en poids.

8. Produit alimentaire pâteux selon l'une quelconque des revendications 1 à 7, **caractérisé** de la pulpe de fruit ou de la pâte de fruit en une quantité d'environ 1 à 2 % en poids.

9. Produit alimentaire pâteux selon la revendication 8, **caractérisé en ce qu'**il présente de la chair de noisette en une quantité d'environ 1,7 % en poids.

10. Agencement multicouche contenant au moins une couche constituée d'un produit alimentaire pâteux selon les revendications 1 à 9 à titre de première couche, dans lequel, on superpose à la première couche, une deuxième couche d'un produit alimentaire pâteux/au moins semi-solide qui présente au moins la même viscosité que celle de la première couche.

11. Agencement multicouche selon la revendication 10, **caractérisé en ce qu'**on prévoit au moins deux couches, dont la composition de base correspond à la composition selon la revendication 1, dans lequel les couches individuelles présentent néanmoins une couleur différente/un goût différent.

12. Agencement multicouche selon la revendication 10 ou 11, **caractérisé en ce que** la couche inférieure représente la couleur foncée que l'on obtient avec du cacao, tandis que la couche supérieure représente une couche de couleur claire au goût de vanille ou au goût de noisette.
